Europäisches Patentamt

European Patent Office

Office européen des brevets

(11) Veröffentlichungsnummer: **0 447 953 A2**

# (12) EUROPÄISCHE PATENTANMELDUNG

(21) Anmeldenummer: 91103895.8

(22) Anmeldetag: 14.03.91

(51) Int. Cl.5: **B32B 27/32**, C08L 23/14, C08L 23/16

(30) Priorität: 23.03.90 DE 4009350

(43) Veröffentlichungstag der Anmeldung: 25.09.91 Patentblatt 91/39

(84) Benannte Vertragsstaaten: AT BE DE ES FR GB IT NL SE

(71) Anmelder: HOECHST AKTIENGESELLSCHAFT Postfach 80 03 20 W-6230 Frankfurt am Main 80(DE)

(72) Erfinder: Murschall, Ursula, Dr. Im Bacchuswinkel 11 W-6505 Nierstein(DE) Erfinder: Peiffer, Herbert, Dr. Thüringer Strasse 26 W-6500 Mainz-Finthen(DE) Erfinder: Schlögl, Gunter, Dr. Finkenweg 2 W-6233 Kelkheim(DE)

(54) **Polypropylenfolie mit guten Hafteigenschaften.**

(57) Es wird eine nicht siegelbare, mehrschichtige Polypropylenfolie beschrieben. Die Folie umfaßt auf einer Basisschicht aus Polypropylen wenigstens eine Deckschicht, die ein Gemisch aus einem Propylen-Butylen-Copolymeren und einem Ethylen-Propylen-Butylen-Terpolymeren entsprechend einem Gehalt von 0,1 bis 7 Gew.-% Ethylen, von 68 bis 95,9 Gew.-% Propylen und von 4 bis 25 Gew.-% Butylen, bezogen auf das Gesamtgewicht des Gemisches, enthält. Die Schichtdicke der Deckschicht ist nicht größer als 0,3 $\mu$m.
Es wird auch ein Verfahren zur Herstellung der Folie beschrieben.

EP 0 447 953 A2

Die Erfindung betrifft eine nicht siegelbare, mehrschichtige Polypropylenfolie, ihre Herstellung und ihre Verwendung.

Siegelfähige und nicht siegelfähige Polypropylenfolien sind in zahlreichen Druckschriften beschrieben. Ein bei diesen Folien immer wieder auftretendes Problem ist die Haftung von Beschichtungen, Bedruckungen oder Klebstoffen auf derartigen Folien, die aufgrund des in hohem Maße unpolaren Charakters der Polyolefine meist unzureichend ist. Aufgrund zunehmend sich verschärfender Umweltschutzbestimmungen gewinnen wäßrige Beschichtungssysteme eine immer stärker ins Gewicht fallende Bedeutung, gerade hier bestehen aber aufgrund ihrer Polarität ganz besondere Haftungsprobleme.

In der EP-A-0 234 758 wird eine spezielle Polypropylenfolie beschrieben, die insbesondere eine gute Beschichtbarkeit mit wäßrigen Beschichtungen besitzen soll. Diese Folie weist allerdings den wesentlichen Mangel auf, daß sie die gute Beschichtbarkeit nur kurz nach der Herstellung besitzt, mit zunehmender Lagerzeit aber verliert. Bei der Herstellung von Laminaten mit dieser Folie unter Einsatz von wäßrigen Klebern hat sich gezeigt, daß die Aushärtung der Kleber mit der Lagerzeit sehr verzögert wird.

Die Aufgabe der vorliegenden Erfindung bestand darin, eine Polypropylenfolie zu schaffen, die neben den üblicherweise wesentlichen Eigenschaften wie Glanz, Kratzfestigkeit, Transparenz usw. insbesondere eine besonders gute Langzeitstabilität ihrer Hafteigenschaften gegenüber Beschichtungen, insbesondere wäßrigen Beschichtungssystemen, Bedruckungen und Klebstoffen, besitzen soll.

Gelöst wird diese Aufgabe durch eine Folie der eingangs genannten Gattung, deren kennzeichnende Merkmale darin zu sehen sind, daß sie auf einer Basisschicht aus Polypropylen wenigstens eine Deckschicht umfaßt, die ein Gemisch aus einem Propylen-Butylen-Copolymeren und einem Ethylen-Propylen-Butylen-Terpolymeren entsprechend einem Gehalt von 0,1 bis 7 Gew.-% Ethylen, von 68 bis 95,9 Gew.-% Propylen und von 4 bis 25 Gew.-% Butylen, bezogen auf das Gesamtgewicht des Gemisches, enthält, wobei die Schichtdicke der Deckschicht nicht größer als 0,3 $\mu$m ist.

Die Basisschicht der erfindungsgemäßen Mehrschichtfolie besteht aus einem Propylenpolymeren, das zum überwiegenden Teil aus Propylen besteht und einen Schmelzpunkt vorzugsweise von 162 bis 168 °C besitzt. Isotaktisches Polypropylen mit einem n-heptanlöslichen Anteil von 6 Gew.-% und weniger stellt ein bevorzugtes Propylenpolymeres dar. Das Propylenpolymere der Basisschicht hat im allgemeinen einen Schmelzindex von 1,5 bis 5 g/10 min bei 230 °C und 21,6 N Belastung (DIN 53735).

Die Deckschicht besteht insbesondere aus einem Gemisch von Copolymer und Terpolymer in einem Mischungsverhältnis von 4:1 bis 1:4, wobei das Copolymer einen Propylengehalt von 98 bis 75 Gew.-% und einen Butylengehalt von 2 bis 25 Gew.-% aufweist und wobei das Terpolymer einen Ethylengehalt von 0,1 bis 7 Gew.-%, einen Propylengehalt von 95,9 bis 68 Gew.-% und einen Butylengehalt von 4 bis 25 Gew.-% aufweist. Ein derartiges Gemisch hat einen bei 20 °C p-xyllöslichen Anteil von 25 bis 70 Gew.-%, vorzugsweise von 40 bis 60 Gew.-%. Der Schmelzpunkt des Gemisches liegt bei 130 °C oder höher, der Schmelzflußindex im Bereich von 0,1 bis 16 g/10 min bei 230 °C und 21,6 N Belastung.

Als besonders geeignet hat sich das Copolymere aus Alfaolefinen erwiesen, das die Firma Mitsui Petrochemicals unter der Bezeichnung TAFMER XR-107 L anbietet.

Um bestimmte Eigenschaften der erfindungsgemäßen Folie noch weiter zu verbessern, können die Schichten geeignete Wirkstoffkomponenten in jeweils wirksamen Mengen enthalten, vorzugsweise Antistatika und/oder Gleitmittel.

Bevorzugte Antistatika sind im wesentlichen geradkettige und gesättigte aliphatische, tertiäre Amine mit einem aliphatischen Rest mit 10 bis 20 Kohlenstoffatomen, die mit 2-hydroxyalkyl-($C_1$-$C_4$)-Gruppen substituiert sind, worunter N,N-bis-(2-hydroxyethyl)-alkylamine mit $C_{10}$-$C_{20}$, vorzugsweise $C_{12}$-$C_{18}$, als Alkylgruppen besonders geeignet sind. Die wirksame Menge an Antistatikum liegt im Bereich von 0,05 bis 1 Gew.-%, bezogen auf die Schicht. Als besonders zweckmäßig hat sich die Ausrüstung der Basisschicht mit 0,1 bis 0,25 Gew.-% eines N,N-bis-Ethoxyalkylamins mit aliphatischen Resten mit 10 bis 22 Kohlenstoffatomen erwiesen.

Als Gleitmittel eignen sich Carbonsäureamide wie Erucasäureamid und Stearinsäureamid oder Polydiorganosiloxane.

Die Deckschicht oder die Deckschichten enthalten vorzugsweise noch zusätzlich übliche anorganische oder organische Antiblockmittel. Geeignete Antiblockmittel sind anorganische Zusatzstoffe, z. B. Siliciumdioxid und Calciumcarbonat oder dergleichen, bzw. organische Zusatzstoffe, z. B. Benzoguanin-Formaldehyd-Copolymere. Wesentlich für das Antiblockmittel ist, daß die mittlere Teilchengröße zwischen 1 und 4 $\mu$m liegt. Der Brechungsindex der Antiblockmittel liegt zwischen 1,4 und 1,6. Die Zusatzmenge beträgt 0,1 bis 0,5 Gew.-%, bezogen auf das Gewicht der Deckschichten.

Die bevorzugte Dicke der Deckschicht oder der Deckschichten liegt im Bereich von 0,10 bis 0,3 $\mu$m.

Die Herstellung der erfindungsgemäßen Polyolefinfolie, die aus mindestens zwei Schichten besteht, wobei die Deckschichten gleiche oder unterschiedliche Zusammensetzung aufweisen können, erfolgt nach dem bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung abgekühlt wird, die Folie biaxial gestreckt (orientiert), die biaxial gestreckte Folie thermofixiert und an der zur Coronabehandlung vorgesehenen Oberflächenschicht coronabehandelt wird. Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, bevorzugt ist. Zunächst wird also wie beim üblichen Coextrusionsverfahren das Polymere oder die Polymermischung der einzelnen Schichten in einem Extruder komprimiert oder verflüssigt. Die Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50 °C gehalten werden, abgekühlt und verfestigt. Die so erhaltene Folie wird dann längs und quer zur Extrusionsrichtung gestreckt, was zu einer Orientierung der Molekülketten führt. In Längsrichtung wird vorzugsweise 4 bis 7:1 und in Querrichtung vorzugsweise 8 bis 10:1 gestreckt. Die Längsstreckung wird bei einer Folientemperatur von vorzugsweise 120 bis 140 °C durchgeführt und die Querstreckung vorzugsweise bei 160 bis 175 °C. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. An die biaxiale Streckung der Folie schließt sich ihre Thermofixierung (Wärmebehandlung) an. Dabei wird die Folie etwa 0,5 bis 10 s lang bei einer Temperatur von 150 bis 160 °C gehalten. Die Coronabehandlung erfolgt vorzugsweise mit einer Wechselspannung von etwa 10 000 V und 10 000 Hz, je nach Wunsch ein- oder beidseitig. Die so hergestellte Folie wird in üblicher Weise mit Hilfe einer Aufwickeleinrichtung aufgewickelt und besitzt direkt nach der Herstellung eine Oberflächenspannung auf der behandelten Seite von 36 bis 42 mN/m, vorzugsweise von 38 bis 40 mN/m.

Die erfindungsgemäße Polyolefinmehrschichtfolie eignet sich insbesondere für die Herstellung von Laminaten. Sie besitzt nämlich all die wichtigen Eigenschaften, die von Polyolefinfolien im Hinblick auf den Einsatz als laminierbare oder beschichtbare Folie gefordert werden. Sie weist inbesondere auf:

- sehr gute optische Eigenschaften, insbesondere Glanz und Trübung,
- hohe Kratzfestigkeit,
- gute Sofort- und Langzeitbeschichtbarkeitseigenschaften, insbesondere mit wäßrigen Systemen,
- gute Oberflächenbehandelbarkeit und gute Geruchseigenschaften sowie
- gute Weiterverarbeitungseigenschaften.

Die erfindungsgemäße Folie eignet sich außerdem ganz besonders als Trägerfolie für wäßrige Barrierebeschichtungssysteme, z. B. auf Basis von wäßrigen Dispersionen von Polyvinylidenchlorid oder Ethylenvinylalkohol-Copolymeren. Sie läßt sich auch hervorragend mit wäßrigen Druckfarben bedrucken, z. B. mit Zweikomponentenreaktivfarbstoffen.

Die Erfindung wird nun an Beispielen noch näher erläutert:

In den nachstehenden Beispielen und Vergleichsbeispielen handelt es sich jeweils um eine biaxial orientierte (Längsstreckverhältnis 5:1, Querstreckverhältnis 10:1) Polyolefinfolie mit einer Basisschicht und zwei Deckschichten, wobei die Basisschicht aus einem isotaktischen Polypropylen mit einem n-heptanlöslichen Anteil von 4 Gew.-%, mit einem Schmelzpunkt von 165 °C und einem Schmelzflußindex von 3,5 g/10 min bei 230 °C und 21,6 N Belastung (DIN 53 735) als Hauptkomponente besteht. Die Basisschicht ist etwa 12 $\mu$m dick, und die beiden Deckschichten, welche die Basisschicht umgeben, sind jeweils etwa 0,2 $\mu$m dick. Die dreischichtigen Polyolefinfolien sind nach dem bekannten Coextrusionsverfahren hergestellt worden.

Alle Schichten enthalten zur Stabilisierung 0,1 Gew.-% Pentaerythrityl-Tetrakis-3-(3,5-ditertiärbutyl-4-hydroxyphenyl)-propionat (Irganox 1010[R]) sowie zur Neutralisierung saurer Katalysatorreste 0,05 Gew.-% Calciumstearat. Die Basisschicht enthält weiterhin 0,2 Gew.-% an N,N-Bisethoxyalkylamin (Alkylrest $C_{10}$-$C_{22}$).

Zur Charakterisierung der Rohstoffe und Folien wurden folgende Meßmethoden benutzt:

Schmelzflußindex:

DIN 53 735 bei 230 °C und 21,6 N Belastung.

Trübung:

Die Trübung der Folie wird in Anlehnung an ASTM-D 1003-52 gemessen, wobei anstelle einer 4°-Lochblende eine 1°-Spaltblende eingesetzt und die Trübung in Prozent für vier übereinanderliegende Folienlagen angegeben wird. Die vier Lagen wurden gewählt, da man hierdurch den optimalen Meßbereich ausnutzt. Die Trübungsbewertung erfolgte mit -15 % = sehr gut, -15 % bis 25 % = mäßig und -25 % = schlecht.

Glanz:

Der Glanz wird nach DIN 67530 bestimmt. Gemessen wird der Reflektorwert als optische Kenngröße für die Oberfläche einer Folie. Angelehnt an die Normen ASTM D-523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Meßwert ist dimensionslos und muß mit dem Einstrahlwinkel angegeben werden.

Kratzfestigkeit bzw. Kratzempfindlichkeit:

Die Kratzfestigkeit wird in Anlehnung an DIN 53 754 bestimmt.

Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut bezeichnet, wenn die Trübungszunahme 20 % beträgt, mit mäßig, wenn die Trübungszunahme bei 20 bis 25 % liegt, und mit schlecht bei Trübungszunahmen von größer 25 %.

Abfallverhalten und Geruch:

Die Coronabehandlung wurde so ausgeführt, daß die behandelte Folienoberfläche jeweils eine Behandlungsintensität von 39 mN/m direkt nach der Behandlung besaß. Die Behandlungsintensität wurde mittels der sogenannten Tintenmethode (DIN 53 364) bestimmt.

Die Behandlungsintensitätsmessung wurde im Abstand von jeweils 14 Tagen wiederholt. Als sehr gut wurde das Abfallverhalten bezeichnet, wenn die Behandlungsintensität nach vier Monaten noch mindestens 37 mN/m betrug ($\Delta B \leq 2$ mN/m). Als schlecht wurde das Abfallverhalten bezeichnet, wenn die Behandlungsintensität $\leq 35$ mN/m betrug ($\Delta B \geq 4$ mN/m). Der Geruch der Folien wurde mittels Geruchsprüfung beurteilt.

Geruch:

Aus der zu beurteilenden Folie wird ein ca. 1 cm dicker Folienstapel (DIN A 4) hergestellt, der in Al-Folie eingeschlagen wird. Zur Beurteilung des Geruchs wird der Folienstapel nach 2 Tagen Lagerung aufgeblättert und zwischen den Folienlagen gerochen.

Geruchsnoten:

+ + geringer Geruch

+ - merkbarer Geruch

-- deutlicher Geruch

Coronabehandelbarkeit

Die Folien wurden unter gleichen Bedingungen einer Coronabehandlung unterzogen. Während bei Beispiel 1 sowie den Vergleichsbeispielen VB 1 und VB 2 Behandlungsintensitäten von 39 mN/m erreicht wurden, zeigen die Vergleichsbeispiele VB 3 und VB 4 lediglich eine Intensität von 36 mN/m.

Bedruckbarkeit

Die Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband keine Farben abgelöst werden, so wurde die Farbhaftung mit sehr gut bezeichnet. Bei geringer Farbablösung wurde die Farbhaftung mit gut und bei deutlicher Farbablösung mit schlecht beurteilt.

Verklebbarkeit mit wäßrigen Klebern/Weiterverarbeitung

Zur Beurteilung der Verklebbarkeit mit wäßrigen Klebern bzw. der Weiterverarbeitungseigenschaften wurden Laminate mit Pergamyn-Papier (Flächengewicht 40 g/m²) hergestellt. Als Kleber wurde der wäßrige reaktive 2-Komponentenkleber Aquabond A + C der Firma Morton Thiokol GmbH, Wikolin Polymer Division (Deutschland) eingesetzt.

Die Laminate wurden 10 Tage nach Herstellung der Folien sowie 6 Monate nach Herstellung der Folien gefertigt. Als sehr gut wurden Laminate beurteilt, bei denen die Verbundfestigkeit direkt nach Produktion die Festigkeit des eingesetzten Papiers erreichten. Als mäßig wurden die Laminate beurteilt, die längere Zeit brauchten.

Als schlecht wurden Laminate bezeichnet, die nicht die Festigkeit des Papiers erreichten.

Der Aufbau der Beispielfolien und der Vergleichsfolien geht aus Tabelle 1 hervor. Die überlegenen Eigenschaften der erfindungsgemäßen Folien gehen aus Tabelle 2 hervor.

Tabelle 1

Beispiele und Vergleichsbeispiele (VB)

| Beispiel 1 | VB 1 | VB 2 | VB 3 | VB 4 |
|---|---|---|---|---|
| Tafmer XR-107 LN | Tafmer XR-107 LN | $C_2$-$C_3$-Copolymer | Polypropylen | Polypropylen |
| $C_2$: ca. 0,5 Gew.-% | $C_2$: ca. 0,5 Gew.-% | $C_2$: ca. 4 Gew.-% | | |
| $C_3$: ca. 77,5 Gew.-% | $C_3$: ca. 77,5 Gew.-% | $C_3$: ca. 96 Gew.-% | | |
| $C_4$: ca. 22 Gew.-% | $C_4$: ca. 22 Gew.-% | | | |
| Schichtdicke 0,2 $\mu$m | Schichtdicke 0,5 $\mu$m | Schichtdicke 0,2 $\mu$m | Schichtdicke 0,5 $\mu$m | Schichtdicke 0,2 $\mu$m |
| $\Delta H_M$ = 74 J/g | $\Delta H_M$ = 74 J/g | $\Delta H_M$ = 72 J/g | $\Delta H_M$ = 125 J/g | $\Delta H_M$ = 125 J/g |
| $T_M$ = 137 °C | $T_M$ = 137 °C | $T_M$ = 139 °C | $T_M$ = 162 °C | $T_M$ = 162 °C |
| $i_{21,6}$ = 7,1 g/10 min | $i_{21,6}$ = 7,1 g/10 min | $i_{21,6}$ = 7 g/10 min | $i_{21,6}$ = 5 g/10 min | $i_{21,6}$ = 5 g/10 min |

EP 0 447 953 A2

| | Trübung | Glanz | Oberflächen-behandelbarkeit | Bedruckbarkeit/Verklebbarkeit/Aushärtung | | Geruch | Abfallverhalten der Coronabehandl. |
|---|---|---|---|---|---|---|---|
| | | | | Kurzzeit | Langzeit | | |
| Beispiel 1 | ++ | ++ | ++ | ++ | ++ | ++ | ++ |
| VB 1 | + | + | ++ | ++ | ++ | ++ | ++ |
| VB 2 | -- | -- | -+ | ++ | ++ | -- | ++ |
| VB 3 | ++ | ++ | -- | -+ | -- | -+ | -- |
| VB 4 | ++ | ++ | -- | -+ | -- | -+ | -- |

++ = sehr gut  
+ = gut  
-+ = mäßig  
-- = schlecht

## Patentansprüche

1. Nicht siegelbare, mehrschichtige Polypropylenfolie, dadurch gekennzeichnet, daß sie auf einer Basisschicht aus Polypropylen wenigstens eine Deckschicht umfaßt, die ein Gemisch aus einem Propylen-Butylen-Copolymeren und einem Ethylen-Propylen-Butylen-Terpolymeren entsprechend einem Gehalt

7

von 0,1 bis 7 Gew.-% Ethylen, von 68 bis 95,9 Gew.-% Propylen und von 4 bis 25 Gew.-% Butylen, bezogen auf das Gesamtgewicht des Gemisches, enthält, wobei die Schichtdicke der Deckschicht nicht größer als 0,3 $\mu$m ist.

2. Folie nach Anspruch 1, dadurch gekennzeichnet, daß die Basisschicht ein Propylenpolymeres enthält, das zum überwiegenden Teil aus Propylen besteht und einen Schmelzpunkt von 162 bis 168 °C besitzt, vorzugsweise isotaktisches Polypropylen mit einem n-heptanlöslichen Anteil von 6 Gew.-% und weniger.

3. Folie nach Anspruch 1 oder 2, dadurch gekennzeichnet, daß die Deckschicht insbesondere aus einem Gemisch von Copolymer und Terpolymer in einem Mischungsverhältnis von 4:1 bis 1:4 besteht, wobei das Copolymer einen Propylengehalt von 98 bis 75 Gew.-% und einen Butylengehalt von 2 bis 25 Gew.-% aufweist und wobei das Terpolymer einen Ethylengehalt von 0,1 bis 7 Gew.-%, einen Propylengehalt von 95,9 bis 68 Gew.-% und einen Butylengehalt von 4 bis 25 Gew.-% aufweist.

4. Folie nach einem der Ansprüche 1 bis 3, dadurch gekennzeichnet, daß die Dicke der Deckschicht oder der Deckschichten im Bereich von 0,10 bis 0,3 $\mu$m liegt.

5. Verfahren zur Herstellung einer Folie nach einem der Ansprüche 1 bis 4, wobei die den einzelnen Schichten der Folie entsprechenden Schmelzen durch eine Flachdüse coextrudiert werden, die so erhaltene Folie zur Verfestigung abgekühlt wird, die Folie biaxial gestreckt (orientiert), die biaxial gestreckte Folie thermofixiert und an der zur Coronabehandlung vorgesehenen Oberflächenschicht coronabehandelt wird, dadurch gekennzeichnet, daß für die Deckschicht ein Gemisch aus einem Propylen-Butylen-Copolymeren und einem Ethylen-Propylen-Butylen-Terpolymeren entsprechend einem Gehalt von 0,1 bis 7 Gew.-% Ethylen, von 68 bis 95,9 Gew.-% Propylen und von 4 bis 25 Gew.-% Butylen, bezogen auf das Gesamtgewicht des Gemisches, eingesetzt wird, wobei die Schichtdicke der Deckschicht so eingestellt wird, daß sie nicht größer als 0,3 $\mu$m ist.

6. Verwendung einer Folie nach einem der Ansprüche 1 bis 4 für die Herstellung von Laminaten.